# EUROPEAN PATENT SPECIFICATION

(11) **EP 1 155 950 B1**
(45) Date of publication and mention of the grant of the patent: **27.04.2005**
(21) Application number: 01201679.6
(22) Date of filing: 08.05.2001
(51) Int. Cl.: B62K 5/04

(54) **Three-wheeled vehicle with two front steering wheels**
Dreirad-Fahrzeug mit lenkbaren Vorderrädern
Vehicule à trois roues à roues avant directrices

(30) Priority: 16.05.2000 IT MI001079
(43) Date of publication of application: 21.11.2001
(73) Proprietor: PIAGGIO & C. S.p.A., 56025 Pontedera (Pisa) (IT)
(72) Inventor: Bagnoli, Allessandro, 56030 Perignano di Lari (Pisa) (IT)
(74) Representative: Zanardo, Giovanni

(56) References cited:
- DE-A- 4 323 120
- DE-B- 1 063 473
- DE-U- 29 701 408
- US-A- 2 493 817

## Description

The present invention refers to a three-wheeled vehicle with two front steering wheels.

At present, there exist numerous types of three-wheeled vehicles, but most of them have one front steering wheel and two rear driving wheels set parallel to one another.

This type of vehicle enables the combination of the stability of an automobile with the manoeuvrability of a motor cycle. In fact, generally the front part of the vehicle - which is connected to the rear part by shock-absorbing systems set at the rear - is able to perform a rolling motion together with / with respect to the rear part, so that the vehicle can be driven exactly like a two-wheeled vehicle (possibility for the driver to incline his/her body), whilst still maintaining to a large extent the intrinsic stability of a four-wheeled vehicle).

In conclusion, these vehicles enable the user to get about easily and comfortably in town traffic thanks to their limited width, and moreover the driver does not have to put his feet down when he stops the vehicle, also thanks to particular known devices, for example mechanical and/or hydraulic ones, for blocking any rolling motion of the vehicle itself. Furthermore, such vehicles provide greater safety and protection in the presence of bad weather.

In addition, precisely on account of their more stable structure, such vehicles can be covered more easily, for example to form a bodied vehicle which provides shelter from bad weather, as mentioned above.

On the other hand, these vehicles present certain problems and drawbacks, such as:
non-precise drivability, in the sense of determining the path of the vehicle, owing to the presence of a single wheel for directing the vehicle, with possible slipping and problematical manoeuvres when braking/accelerating, etc.;
the need for the adoption of a differential system for the rear wheels; and
the limitation involved in adopting rear-wheel drive systems on account of the small space available, and consequent difficulty of inserting also a passenger seat and/or a support for luggage, and/or luggage alone.

A three-wheeled vehicle including the features of the preamble of claim 1 is known from DE-A-1063 473.

The main purpose of the present invention is to solve totally, or at least to a fair extent, the problems and drawbacks referred to above, at the same time making a three-wheeled vehicle.

Another purpose is to provide a three-wheeled vehicle which enables the greatest possible adherence to the road, albeit in the presence of a capacity for inclination that favours drivability like that of a motor vehicle.

A further purpose is to provide a three-wheeled vehicle that can be covered, for example with a vehicle body.

Not the last purpose is to make available an economical three-wheeled vehicle with space for a passenger and for luggage, which is safe and which provides a certain comfort.

Yet another purpose is to provide a three-wheeled vehicle that does not have any differential, with consequent smaller encumbrance and more space available for possible additional members.

The above purposes according to the present invention are achieved by providing a three-wheeled vehicle with two front steering wheels, as specified in Claim 1.

Further characteristics and advantages of the present invention emerge from the ensuing dependent claims.

The characteristics and advantages of a three-wheeled vehicle with two front steering wheels according to the present invention will emerge more clearly evident from the ensuing description, which is provided purely to give an explanatory and non-limiting example, with reference to the attached schematic drawings, in which:

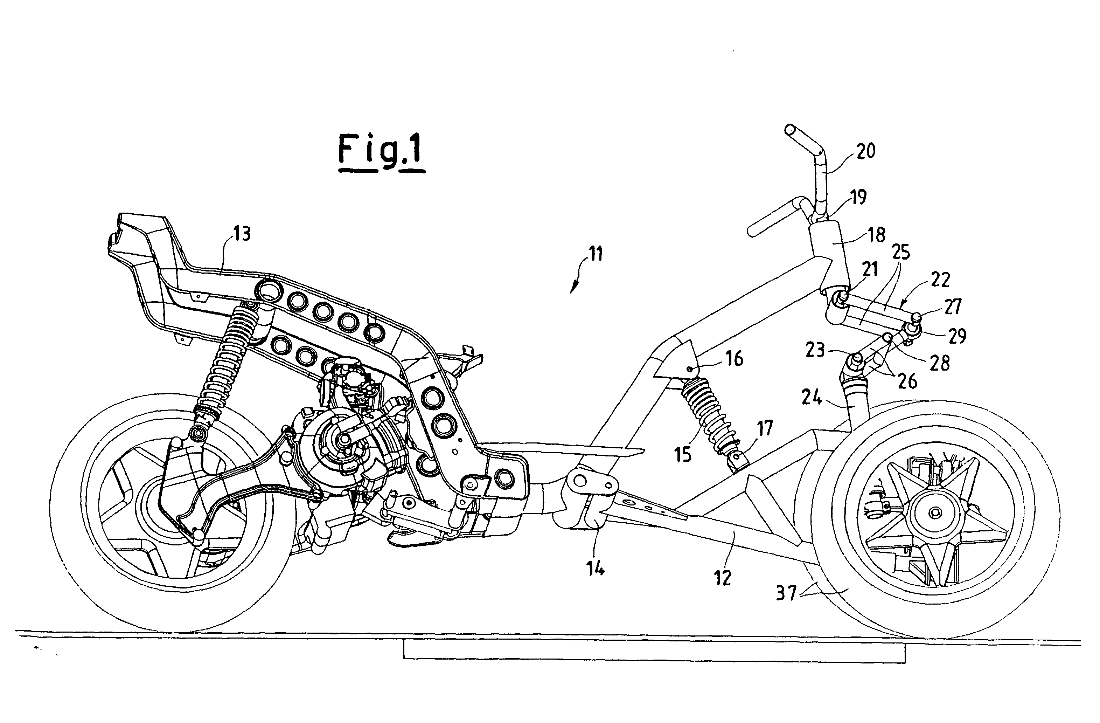

Figure 1 is a perspective view of a three-wheeled vehicle with two front steering wheels according to the present invention, in which connection to the rear wheel is shown only partially;

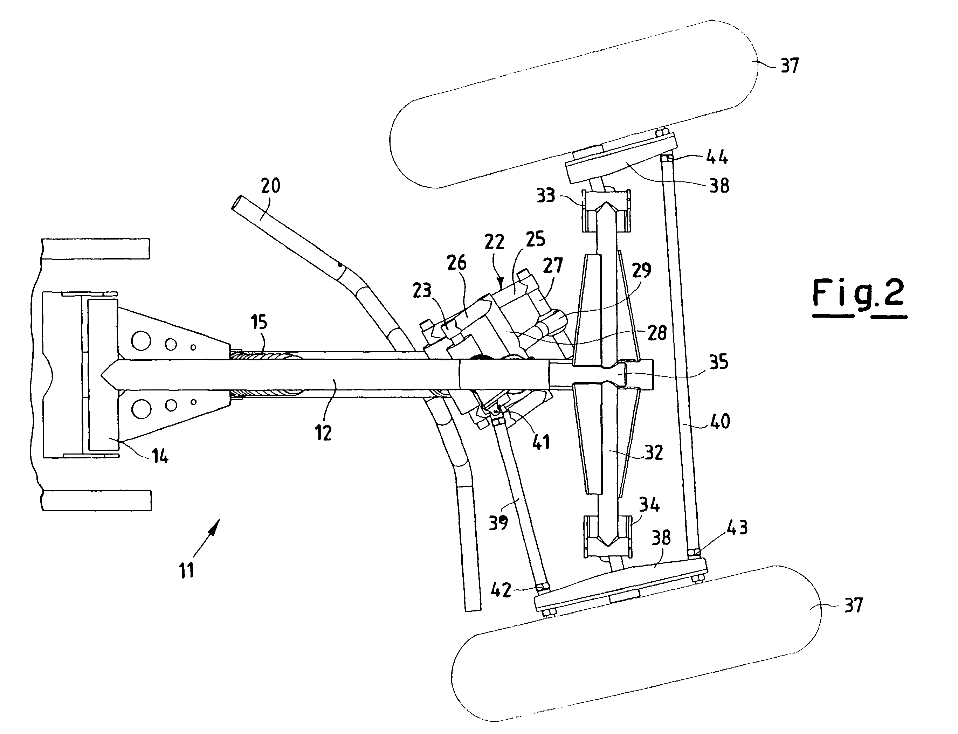

Figure 2 is a view from underneath of the front part of the vehicle illustrated in Figure 1;

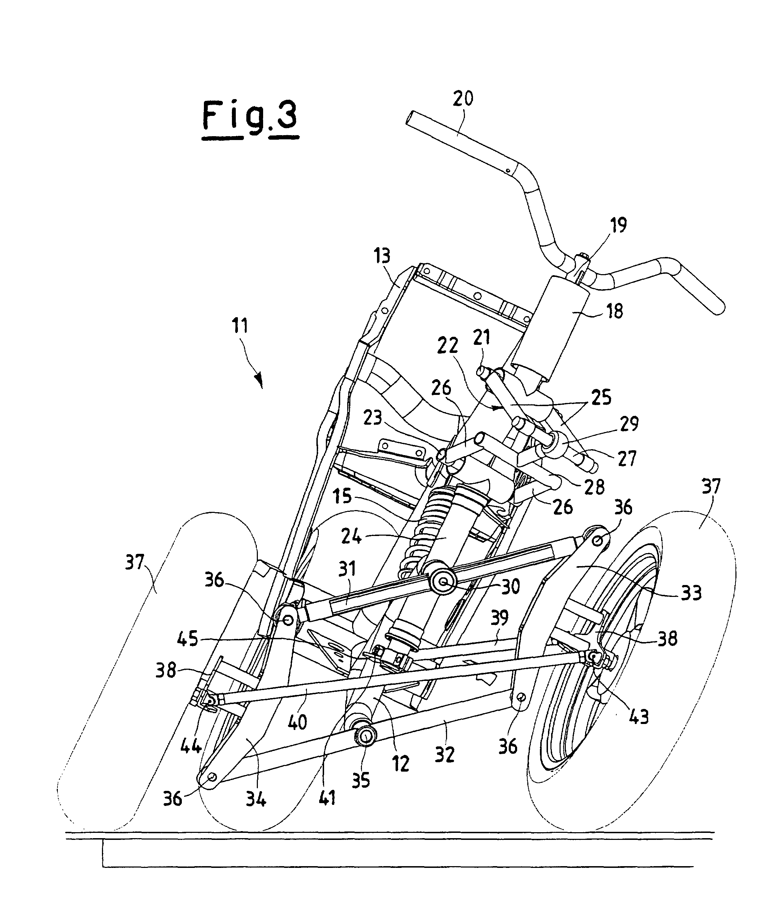

Figure 3 is a front perspective view of the vehicle illustrated in Figure 1, with a slight steering inclination;

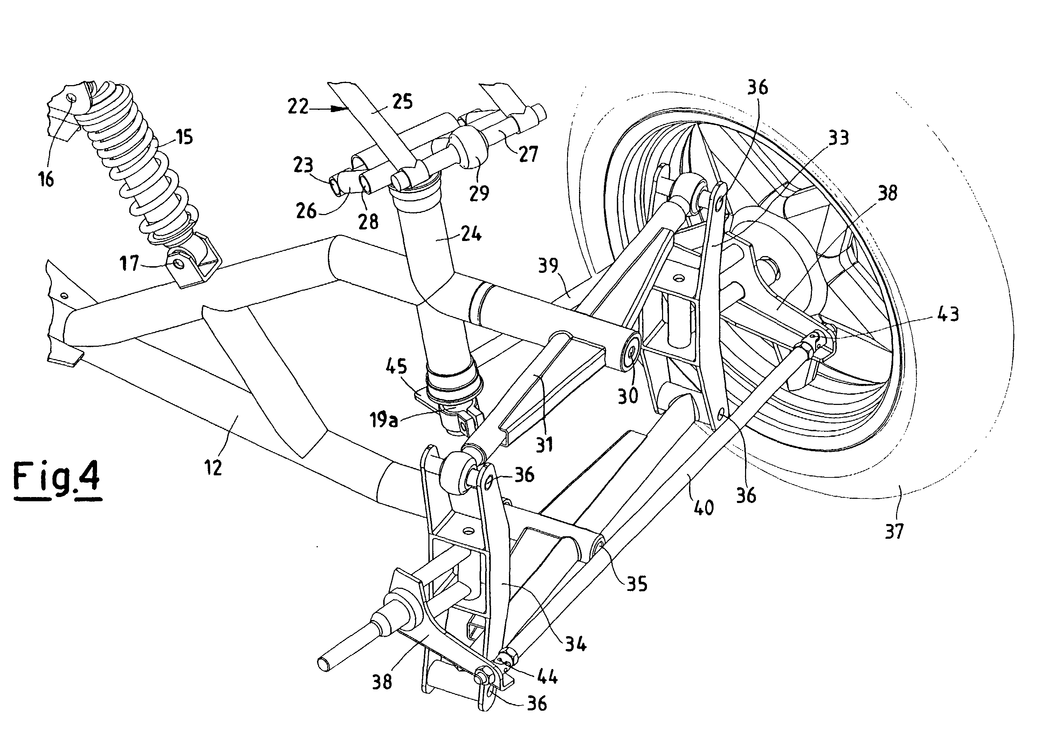

Figure 4 is an enlarged detail of a first half of the front part of the vehicle illustrated in Figure 1; and

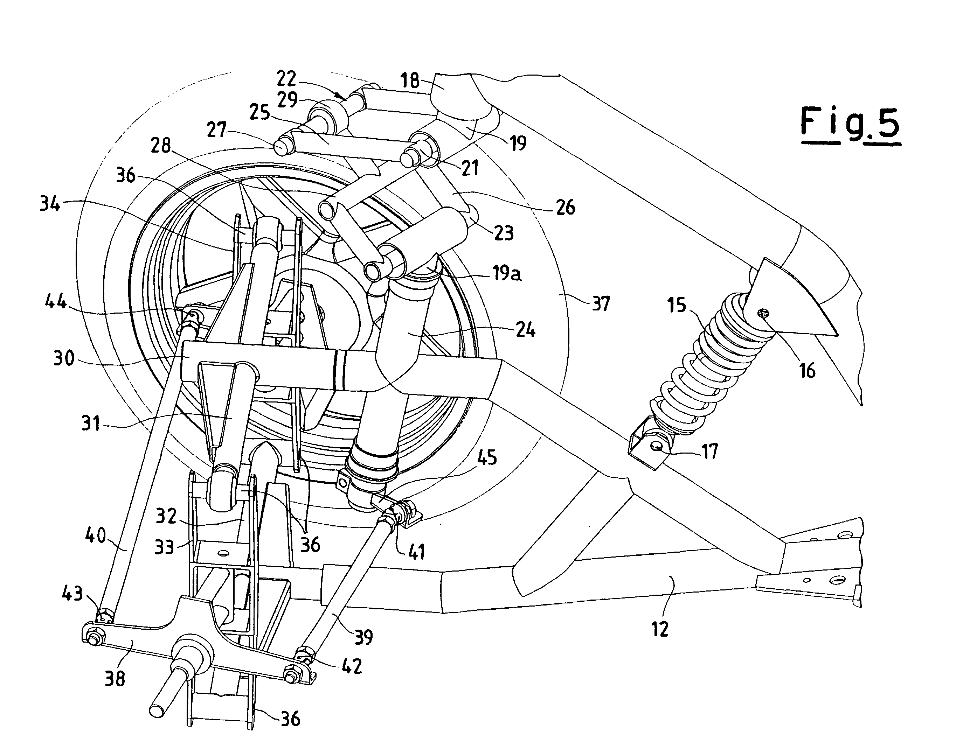

Figure 5 is an enlarged detail of a second half of the front part of the vehicle illustrated in Figure 1.

With reference to the figures, a three-wheeled vehicle with two front steering wheels according to the present invention is designated, as a whole, by the reference number 11.

The vehicle 11 basically comprises a frame consisting of a forecarriage 12 and a rear axle 13, articulated together in a hinge region 14. In addition, the rear axle can pitch in a vertical plane with respect to the forecarriage 12, i.e., with respect to the hinge region or point 14, thanks to the interposition of a shock absorber 15. The said shock absorber 15 is hinged at its opposite ends to the rear axle 13 in 16 and to the forecarriage 12 in 17.

The forecarriage 12 presents a widened-U shape in its longitudinal direction, the front end of the forecarriage 12 terminating in a top steering tube or sleeve 18, in which a steering column 19 having at its top end an handlebar 20 is housed. At a bottom end, the steering column 19 carries, hinged in 21, a compound lever, designated as a whole by 22, which, when the vehicle is advancing straight forward, is transverse to the frame. The compound lever 22 is in turn hinged in 23 at its bottom end to a further portion 19a of the steering column, the said portion 19a being inserted in a bottom steering tube or sleeve 24 which is fixedly connected to the forecarriage 12.

The compound lever 22 is made up of a pair of double levers 25 and 26, the former of which, 25, terminates with a shaft or pin 27, and the latter, 26, is rigidly connected to a lever 28 shaped like a reversed T, carrying at one central free end a support 29 designed to accept the shaft 27 in such a way that the shaft 27 can rotate. In this way, the two pairs of levers 25 and 26 are articulated together.

The bottom steering tube or sleeve 24, which, as has been said, is connected fixedly to the forecarriage 12, carries a first rod 31 ^{∼} which is transverse to the entire frame and forms part of an articulated quadrilateral belonging to the steering assembly fixed so that it is pivoted centrally in a cylindrical hinge 30.

A second rod 32, opposite to the first rod 31 in the aforesaid articulated quadrilateral, which is completed by two further side rods 33 and 34, set opposite to one another, is pivoted centrally in a second cylindrical hinge 35 at the bottom free end of the forecarriage 12.

The four rods 31, 32, 33 and 34 are, of course, connected at their ends by articulated joints 36 which complete the above-mentioned articulated quadrilateral.

The two side rods 33 and 34 set opposite to one another support two wheels 37 by means of articulated joints of a cylindrical type, which are located on supports 38. The orientation of these articulated joints, and consequently of the wheels 37, is determined by two rigid rods 39 and 40.

The first rod 39, which is shorter, is pivoted on one side in 41, to the bottom end 19a of the steering column 19 by means of a lever arm 45, and on the other side in 42, to a first of the two supports 38 bearing a wheel 37. The second rod 40 is set between the two supports 38, which face one another, by means of pivoting points 43 and 44 to the said supports 38.

In this way, a correct relation of the various parts of the steering assembly is obtained.

The movement of steering imposed by the driver of the three-wheeled vehicle by means of the handlebar 20 is transmitted by the steering column 19, 19a, through the top steering tube or sleeve 18, which belongs to the rear axle 13, and through the compound lever 22, to the bottom steering tube or sleeve 24, which belongs to the forecarriage 12.

In this way, the rear axle 13 can pitch in a vertical plane with respect to the forecarriage 12, both on account of the hinge point 14 and on account of the interposition of the shock absorber 15

The steering motion is then transmitted from the the bottom end of steering column 19a, passing through the steering tube or sleeve 24, to the front wheels 37 by means of the lever arm 45 and the two levers 39 and 40.

The entire steering assembly (articulated quadrilateral and levers with articulated joints) is thus free to roll about the cylindrical hinges 30 and 35 according to the position/inclination of the driver for any steering angle.

With the splitting of the rear axle from the forecarriage with the interposition of a shock-absorbing system 15, with the splitting of the front steering tube or sleeve 18, 24, and with a steering system having the steering motion independent of the inclination of the front wheels 37, extreme driving precision and safety is obtained. In addition, there are also other advantages, such as a vehicle that can be equipped with a body, elimination of the differential, and the possibility of powering the vehicle with various types of engines, etc.

A three-wheeled vehicle according to the invention is thus equipped with two parallel front steering/inclinable wheels which impart direction, and a central rear driving wheel which can be inclined with the vehicle. Such a vehicle can thus be driven like a motor cycle: a front part, which is inclinable (rolling motion) together with the rear.

Advantageously, since the front steering assembly (articulated quadrilateral) can roll with respect to the rear part, the front wheels can in turn be inclined like the rear wheel, at the same time, however, always remaining in contact with the ground, with a greater adherence, to the advantage of drivability of the vehicle itself.

Furthermore, the said vehicle is suitable for being covered (bodied), given its limited and compact size.

In addition, the forecarriage of the said vehicle can oscillate in a vertical plane (pitching motion) with respect to the rear axle by being hinged to the latter and having at the front a shock absorber which connects the two parts. In this solution, the steering tube/sleeve is split into two parts which are not aligned with one another (one belonging to the rear axle, together with the handlebars, and the other to the forecarriage, together with the steering system), so that, since the two parts move with respect to one another, an appropriate compound lever for control/transmission between the two parts of the steering sleeve/tube is necessary.

In brief, with a three-wheeled vehicle according to the invention the following advantages are achieved:
more precise, safer and more manoeuvrable drivability (two steering and inclinable wheels which impart direction);
availability of a more comfortable vehicle;
greater economy (elimination of the differential);
freedom from the known types of rear-wheel drive, thus providing a lot more space at the rear owing to the absence of the differential system; and
availability of more space at the rear (for possible passenger, luggage support, luggage, etc.).

## Claims

1. A three-wheeled vehicle (11) with two front steering wheels, comprising a frame, an handlebar, a steering assembly, and front and rear wheels, a pair of front wheels (37) supported by a forecarriage (12) and a rear axle (13), a steering column (19, 19a) connected to the handlebar (20), one end (19a) of said steering column being connected to a pair of articulated rods (39, 40) which are set in succession and which control supports (38) bearing said front wheels (37), said supports (38) being connected to opposite rods (33, 34) of an articulated quadrilateral (31, 32, 33, 34), **characterized in that** said supports are supported on the remaining two opposite rods (31, 32) by two hinges (30, 35), which are both carried by the forecarriage (12), forecarriage (12) and rear axle (13) being articulated together in a hinge region (14), said rear axle (13) pitching in a vertical plane with respect to said forecarriage (12), there being a shock absorber (15) set between said forecarriage (12) and said rear axle (13), the steering column (19, 19a) being housed and free to turn in a pair of steering tubes or sleeves (18, 24), one being connected to said rear axle (13) and the other to said forecarriage (12).

2. A three-wheeled vehicle (11) with two front steering wheels according to Claim 1, **characterized in that** said steering column is divided into two parts (19, 19a) connected together by an articulated intermediate compound lever (22), one first part (19) being set in a first, top, steering tube or sleeve (18) which is integral with said rear axle (13), and one second part (19a) being set in a second, bottom, steering tube or sleeve (24) which is integral with said forecarriage (12).

3. A three-wheeled vehicle (11) with two front steering wheels according to Claim 2, **characterized in that** said intermediate compound lever (22) is articulated at its ends (in 21 and 23) and comprises a pair of double levers (25, 26), the former of which (25) terminates with a shaft or pin (27), and the latter (26) is rigidly connected to a lever (28) shaped like a reversed T, carrying at one central free end a support (29) designed to accept said shaft (27) so that it can turn.

4. A three-wheeled vehicle (11) with two front steering wheels according to Claim 1, **characterized in that** said two hinges (30, 35), which are both carried by said forecarriage (12), are cylindrical hinges.

5. A three-wheeled vehicle (11) with two front steering wheels according to Claim 1, **characterized in that** said pair of rods (39, 40) is made up of a first rod (39) pivoted at one end (in 41) to a lever (45) connected to the bottom end (19a) of said steering column, and at the other end (in 42) to a first of said supports (38), and of a second rod (40) which is set between said two supports (38) which face one another and is pivoted to them (in 43, 44).

## Patentansprüche

1. Dreirädriges Fahrzeug (11) mit zwei vorderen Steuerrädern, umfassend einen Rahmen, eine Lenkstange, eine Lenkanordnung, und Vorder- und Hinterräder, ein Paar Vorderräder (37), welche durch ein Vordergestell (12) und eine Hinterachse (13) getragen werden, eine Lenksäule (19,19a), welche mit der Lenkstange (20) verbunden ist, wobei ein Ende (19a) der Lenksäule mit einem Paar von Gelenkstangen (39,40) verbunden ist, die nacheinander angeordnet sind und die Vorderräder (37) tragende Träger (38) steuern, wobei die Träger (38) mit zwei gegenüberliegenden Stangen (33, 34) eines Gelenkvierecks (31, 32, 33, 34) verbunden sind, **dadurch gekennzeichnet, dass** die Träger an den verbleibenden beiden gegenüberliegenden Stangen (31, 32) durch zwei Gelenke (30, 35), welche beide durch das Vordergestell (12) getragen werden, getragen werden, wobei das Vordergestell (12) und die Hinterachse (13) in einem Gelenkbereich (14) miteinander gelenkig verbunden sind, wobei die Hinterachse (13) in eine vertikale Ebene hinsichtlich des Vordergestells (12) einspringt, wobei dort zwischen dem Vordergestell (12) und der Hinterachse ein Stossdämpfer (15) eingesetzt ist, wobei die Lenksäule (19, 19a) in ein Paar von Lenkrohren oder Lenkhülsen (18,24) frei drehbar eingesetzt ist, wobei eine mit der Hinterachse (13) und die andere mit dem Vordergestell (12) verbunden ist.

2. Dreirädriges Fahrzeug (11) mit zwei vorderen Steuerrädern nach Anspruch 1, **dadurch gekennzeichnet, dass** die Lenksäule in zwei durch einen gelenkig gelagerten dazwischenliegenden Verbindungshebel (22) verbundene Teile (19, 19a) unterteilt ist, wobei ein erster Teil (19) in ein erstes oberes Lenkrohr oder Lenkhülse (18) eingesetzt ist, welches in die Hinterachse (13) eingebaut ist, und wobei ein zweiter Teil (19a) in ein zweites unteres Lenkrohr oder Lenkhülse (24) eingesetzt ist, welches in das Vordergestell (12) eingebaut ist.

3. Dreirädriges Fahrzeug (11) mit zwei vorderen Steuerrädern nach Anspruch 2, **dadurch gekennzeichnet, dass** der dazwischenliegende Verbindungshebel (22) an seinen Enden (in 21 und 23) gelenkig gelagert ist und ein Paar von Doppelhebeln (25, 26) umfasst, von denen ersterer (25) in einer Welle oder einem Stift (27) endet und letzterer (26) mit einem wie ein umgekehrtes T geformten Hebel starr verbunden ist, welcher auf einem mittleren freien Ende eine Halterung (29) trägt, die ausgestaltet ist, um die Welle (27) aufzunehmen, so dass sie sich drehen kann.

4. Dreirädriges Fahrzeug (11) mit zwei vorderen Steuerrädern nach Anspruch 1, **dadurch gekennzeichnet, dass** die zwei Gelenke (30,35), die beide von dem Vordergestell (12) getragen sind, sind zylindrische Gelenke .

5. Dreirädriges Fahrzeug (11) mit zwei vorderen Steuerrädern nach Anspruch 1, **dadurch gekennzeichnet, dass** das Paar von Stangen (39, 40) aus einer ersten Stange (39), welche an einem Ende (in 41) mit einem Hebel (45) schwenkbar verbunden ist, der mit dem unteren Ende (19a) der Lenksäule und am anderen Ende (in 42) mit einem ersten der Träger (38) verbunden ist, und aus einer zweiten Stange (40), welche zwischen die zwei Träger (38) gesetzt ist, die einander gegenüber liegen und mit ihr (in 43, 44) schwenkbar verbunden sind, gebildet ist.

## Revendications

1. Véhicule à trois roues (11) avec deux roues directrices avant, comprenant un cadre, un guidon, un ensemble de direction, et des roues avant et arrière, une paire de roues avant (37) supportées par un avant-train (12) et un essieu arrière (13), une colonne de direction (19, 19a) reliée au guidon (20), une extrémité (19a) de ladite colonne de direction étant reliée à une paire de bielles (39, 40) qui sont installées en succession et qui commandent des supports (38) supportant lesdites roues avant (37), lesdits supports (38) étant reliés à des bielles opposées (33, 34) d'un quadrilatère articulé (31, 32, 33, 34), **caractérisé en ce que** lesdits supports sont supportés par les deux bielles opposées restantes (31, 32) par deux articulations (30, 35), qui sont toutes les deux supportées par l'avant-train (12), l'avant-train (12) et l'essieu arrière (13) étant articulés l'un sur l'autre dans une région d'articulation (14), ledit essieu arrière (13) se trouvant dans un plan vertical par rapport audit avant-train (12), il y ayant un amortisseur de choc (15) installé entre ledit avant-train (12) et ledit essieu arrière (13), la colonne de direction (19, 19a) étant logée et libre de tourner dans une paire de tubes ou manchons de direction (18, 24), l'un étant relié audit essieu arrière (13) et l'autre audit avant-train (12).

2. Véhicule à trois roues (11) avec deux roues directrices avant selon la revendication 1, **caractérisé en ce que** ladite colonne de direction est divisée en deux parties (19, 19a) reliées l'une à l'autre par un levier composé intermédiaire articulé (22), une première partie (19) étant installée dans un premier tube ou manchon de direction supérieur (18) qui est solidaire avec ledit essieu arrière (13), et une seconde partie (19a) étant installée dans un second tube ou manchon de direction inférieur (24) qui est solidaire avec ledit avant-train (12).

3. Véhicule à trois roues (11) avec deux roues directrices avant selon la revendication 2, **caractérisé en ce que** ledit levier composé intermédiaire (22) est articulé au niveau de ses extrémités (dans 21 et 23) et comprend une paire de double leviers (25, 26), dont le premier (25) se termine avec un arbre ou une goupille (27), et le second (26) est relié de façon rigide à un levier (28) formé comme un T inversé, supportant au niveau d'une extrémité libre centrale un support (29) conçu pour accepter ledit arbre (27) de sorte qu'il peut tourner.

4. Véhicule à trois roues (11) avec deux roues directrices avant selon la revendication 1, **caractérisé en ce que** lesdites deux articulations (30, 35), qui sont toutes les deux supportées par ledit avant-train (12), sont des articulations cylindriques.

5. Véhicule à trois roues (11) avec deux roues directrices avant selon la revendication 1, **caractérisé en ce que** ladite paire de bielles (39, 40) est constituée d'une première bielle (39) articulée au niveau d'une extrémité (dans 41) sur un levier (45) relié à l'extrémité inférieure (19a) de ladite colonne de direction, et au niveau de l'autre extrémité (dans 42) à un premier desdits supports (38), et d'une seconde bielle (40) qui est installée entre lesdits deux supports (38) qui se font face l'un à l'autre et est articulé sur eux (dans 43, 44).
